# EUROPÄISCHE PATENTANMELDUNG

(11) **EP 1 142 487 A2**
(43) Veröffentlichungstag der Anmeldung: **10.10.2001**
(21) Anmeldenummer: 01108379.7
(22) Anmeldetag: 03.04.2001
(51) Int. Cl.: A23L 1/0532, A23L 1/0526, A23P 1/02, A23P 1/04, C13F 3/00

(54) **Wirbelschichtverfahren zur Herstellung eines Gelierzuckers bestehend aus Zucker und gelbildenden Polysacchariden**

(30) Priorität: 05.04.2000 DE 10016905
(71) Anmelder: Braunschweigische Maschinenbauanstalt AG, 38122 Braunschweig (DE)
(72) Erfinder: Caspers, Gerald, 38527 Meine-Abbesbüttel (DE); Klein, Christian, Dr., 38300 Wolfenbüttel (DE); Krell, Lothar, Dr., 38173 Erkerode (DE)
(74) Vertreter: Gramm, Werner, Prof. Dipl.-Ing.

(57) **Zusammenfassung**

Die Erfindung betrifft ein Verfahren zur Herstellung eines Gelierhilfsmittels (Gelierzucker), bestehend aus körnigen Zuckerteilchen und feinvermahlenen, gelbildenden Polysacchariden (nachfolgend "Geliermittel" genannt). Zur Herstellung eines verklumpungsfreien, abriebfesten, entmischungsstabilen und lagerfähigen Produktes wird erfindungsgemäß vorgeschlagen, dass in einem Wirbelschichtverfahren im Durchlauf durch eine Vorrichtung die zugeführten Zuckerteilchen durch Luftbeaufschlagung von unten so fluidisiert werden, dass die Zuckerteilchen angehoben und in einem schwebenden Zustand bei einem Lückenvolumen in der Wirbelschicht von etwa 60 bis 70 % gehalten werden, wobei die Zuckerteilchen in einer ersten Fluidisierungszone von oben mit Wasser oder einer wässrigen Lösung bedüst und mit dem gleichzeitig zugeführten Geliermittel agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet wird (Trocknungszone).

## Beschreibung

Die Erfindung betrifft ein Verfahren zur Herstellung eines Gelierhilfsmittels (nachfolgend "Gelierzucker" genannt) durch Überziehen von körnigen Zuckerteilchen mit feinvermahlenen, gelbildenden Polysacchariden (nachfolgend "Geliermittel" genannt).

Ein derartiges Verfahren lässt sich beispielsweise der DE-PS 1 275 853 entnehmen. Bei diesem vorbekannten Verfahren werden körniger Zucker und nieder- oder mittelverestertes Pektin, das auf eine Teilchengröße von 2 - 50 feinvermahlen worden ist, gemischt und unter Fortsetzung des Mischvorgangs kurzzeitig mit einer lediglich ein Klebrigwerden der Zuckeroberfläche bewirkenden Menge an Wasser, insbesondere Wasserdampf, behandelt. Dabei wird vorzugsweise zunächst eine Vorvermahlung aus dem niedrig- oder mittelveresterten Pektin und Zitronensäure oder einer anderen organischen Genusssäure hergestellt, worauf dann diese Vorvermahlung mit dem körnigen Zucker vereint wird. Bei Durchführung dieses Verfahrens besteht jedoch die Gefahr von Verklumpungen; der fertige Gelierzucker neigt überdies zu Entmischungserscheinungen und Inhomogenitäten.

In der DE-PS 1 800 141 wird ein vergleichbares Verfahren beschrieben, bei dem ein Gemisch aus einem Gewichtsteil Pektin auf 1 - 4 Gewichtsteile Zucker auf eine Korngröße von unter 100 Mikron gemahlen, durch Bedampfen zu einem schwammigen Produkt agglomeriert und dann getrocknet wird. Die Bedampfung erfolgt mit überhitztem Dampf in einem Bedampfungsrohr; die Trocknung des agglomerierten Produktes wird auf 96 - 98 % Trockensubstanz vorgenommen. Dabei kann dem Mahlgut Wein- und/oder Zitronensäure und ggf. Ascorbinsäure zugesetzt werden. Das agglomerierte Produkt wird im Fließbett durch Heißgase getrocknet. Jedoch hat sich in der Praxis gezeigt, dass auch dieser Gelierzucker zu Entmischungserscheinungen neigt.

Zur Lösung der vorstehend genannten Probleme wird in der DE 44 24 866 C1 ein Verfahren zur Herstellung eines Gelierhilfsmittels durch Überziehen von körnigen Zuckerteilchen mit feinvermahlenem Pektin vorgeschlagen, bei dem zunächst der Zucker mit 0,05 - 0,5 Gew.-% eines Öles und danach mit dem Pektin vermischt wird. Zusätzlich kann das Gelierhilfsmittel kristalline, pulverkörnige Komponenten wie Zitronensäure, Trikaliumcitrat und Kaliumsorbat enthalten, die zusammen mit den körnigen Zuckerteilchen mit dem Öl vermischt werden, das ein neutrales Pflanzenöl sein kann. Vom Verbraucher wird jedoch der Zusatz von Öl grundsätzlich als nachteilig empfunden; Entmischungserscheinungen konnten auch mit diesem Verfahren nicht vollständig behoben werden.

Zur Herstellung eines lagerfähigen und entmischungsstabilen Produktes schlägt die DE 197 49 820 C1 ein Verfahren zur Herstellung einer Geliermittelmischung aus Pektin, einer Genusssäure und einem Disaccharidalkohol-Gemisch vor, bei dem das Pektin in einem ersten Verfahrensschritt mit dem Disaccharidalkohol-Gemisch gemischt und in einem zweiten Verfahrensschritt die Genusssäure hinzugegeben wird. Nach dem ersten Verfahrensschritt kann das Pektin und das Disaccharidalkohol-Gemisch mit einem Hüllstoff in auf über den Schmelzpunkt des Hüllstoffs erwärmter Form gemischt werden, wobei als Hüllstoff ein gehärtetes Pflanzenfett eingesetzt werden kann. Dabei soll das Pektin mit dem Hüllstoff besprüht werden; das Disaccharidalkohol-Gemisch wird anschließend bei erhöhter Temperatur dazugegeben, und nach Abkühlen werden die anderen Komponenten zusammengemischt. Als Pektin wird ein amidiertes Pektin und als Genusssäure Zitronensäure, Milchsäure, Weinsäure, D-Äpfelsäure, L-Äpfelsäure, DL-Äpfelsäure, L-Ascorbinsäure, Bernsteinsäure, Gluconsäure oder Glucono-delta-Lacton verwendet.

Die DD 265 787 A1 offenbart ein Verfahren zur Herstellung von Nonpareille in einer Wirbelschicht sowie zur Herstellung von Streukügelchen, Liebesperlen, Pillen, kugelähnlichen Mehrstoffgemischen. In einer Wirbelschicht wird ein Keimgut, wie z.B. Kristallzucker, mit einem Korndurchmesser von 0,2 bis 1,2 mm mittels eines Fluidisierungsmediums mit einer Temperatur von 15° bis 50° C fluidisiert; zeitgleich und parallel wird ein Auftragssaft, z. B. Sirupe, siruphaltige Zuckerlösungen, Wasser u.a. auf das Keimgut aufgedüst; zeitgleich und parallel wird ein Auftragsstoff, vorzugsweise ein pulvriger Feststoff mit einer Korngröße kleiner 0,05 mm aufgebracht. Dabei wird das Wirbelbett durch einen direkt über dem Anströmboden angeordneten Rührer unterstützt und die Wirbelschicht im Lockerungspunkt mit einer Geschwindigkeit des Fluidisierungsmediums von anfangs vorzugsweise 0,3-0,5 bis etwa 0,8-1,5 m/s im Verlaufe des Schichtaufbaus ansteigend in einem chargenweise arbeitenden Wirbelschichtapparat geführt, wobei das Erzeugnis einen Masseanteil des Keimgutes von vorzugsweise 20 %, des Auftragsstoffes von vorzugsweise 60 %, des Lösungsmittels des Auftragssaftes von vorzugsweise 5 % des Feststoffanteils des Auftragssaftes von vorzugsweise 15 %, bezogen auf das Erzeugnis, aufweist. Im Anschluss an die Kornvergrößerung im Wirbelschichtapparat bis auf einen mittleren Durchmesser von etwa 1,2 mm und Klassieren mittels einer Siebmaschine können die beschichteten Zuckerkörner in demselben Wirbelschichtapparat auf die gleiche beschriebene Art und Weise durch Aufsprühen des genannten Auftragssaftes und Einblasen von Maispuder pulverbeschichtet und geglättet werden.

Bei diesem vorbekannten Verfahren wird jedoch keine stationäre Wirbelschicht erzeugt. Denn bei einem mittleren Keimgutdurchmesser von 0,65 mm und einer Anfangs-Luftgeschwindigkeit von 0,4 m/s ergibt sich mit den aus der Literatur bekannten Kriterialgleichungen ein relatives Zwischenraumvolumen von Epsilon = 0,467. Dieser Wert liegt nur geringfügig über dem Wert von maximal 0,42 für eine unbewegte Schüttschicht. Die unzureichende Durchströmung und Umwälzung des Keimgutes soll daher bei diesem vorbekannten Verfahren durch Einsatz eines Rührers in der Produktschicht vermieden werden. Es handelt sich bei diesem Verfahren also genau genommen nicht um eine Wirbelschicht sondern um eine vorrangig mechanisch mittels Rührer bewegte Schüttschicht, die mit Luft durchströmt wird.

Die DE 28 51 627 A1 offenbart ein Verfahren zur Agglomeration pulverförmiger Feststoffe in einem wässrigen Medium. Dabei handelt es sich insbesondere um ein Verfahren zum Vermischen eines festen, pulverförmigen Kohlenhydrats mit Wasser, einem wässrigen Sirup oder einer Kohlenhydratlösung und zwar unter solchen Bedingungen, dass ein trocknes, freifließendes Agglomerat erhalten wird. Dieses Verfahren soll insbesondere zur Herstellung von trocknen, freifließenden Sucrose- und Invertzucker-Agglomeraten als Trockenfondants geeignet sein, die durch Zugabe von Wasser leicht und rasch wieder gebrauchsfertig sind. Als pulverförmiger Feststoff wird ein Kohlenhydrat verwendet, der pneumatisch in einem Gasstrom befördert wird, und auf den das wässrige Medium in einer Sprühzone versprüht wird. Das so erhaltene Gemisch aus wässrigem Medium und pulverförmigem Feststoff wird in dem Gasstrom während eines für die Agglomeration ausreichenden Zeitraums gehalten. Die Entnahme der Agglomerate aus der Sprühzone erfolgt durch pneumatische Förderung mit dem Gasstrom.

Die DE 35 16 111 A1 offenbart eine Gelierhilfe sowie ein Verfahren zu dessen Herstellung. Dabei besteht die Gelierhilfe aus körnigem Zucker, damit oberflächlich verklebtem feinvermahlenem Hydrocolloid und einer kristallinen Genusssäure, die etwa den gleichen Körnungsgrad aufweist wie der Zucker und mit einer bei Temperaturen über 50° C erweichenden hydrophoben Schicht überzogen ist. Gemäß dem zur Herstellung dieser Gelierhilfe offenbarten Verfahren wird in einem Mischer zunächst der körnige Zucker mit dem Hydrocolloid verklebt und dann die hydrophobierte Säure zugegeben. Dann werden in einem Wirbelbett-Trockner mit einer Heizzone und einer Kühlzone in der Heizzone Restfeuchtigkeit aus der Zuckerkomponente entzogen und in der Kühlzone die Säurekomponente mit der Zuckerkompente verklebt.

Der Erfindung liegt die Aufgabe zugrunde, ein Verfahren zur Herstellung eines Gelierzuckers zu entwickeln, das unter Vermeidung von Verklumpungen zu einem abriebfesten, entmischungsstabilen und lagerfähigen Produkt führt.

Ausgehend von dem eingangs beschriebenen Verfahren wird diese Aufgabe erfindungsgemäß dadurch gelöst, dass in einem Wirbelschichtverfahren im Durchlauf durch eine Vorrichtung die zugeführten Zuckerteilchen durch Luftbeaufschlagung von unten so fluidisiert werden, dass die Zuckerteilchen angehoben und in einem schwebenden Zustand bei einem Lückenvolumen in der Wirbelschicht von etwa 60 bis 70 % gehalten werden, wobei die Zuckerteilchen in einer ersten Fluidisierungszone von oben mit Wasser oder einer wässrigen Lösung bedüst und mit dem gleichzeitig zugeführten Geliermittel agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet wird (Trocknungszone).

Ein zweckmäßiger Fluidisierungsgrad ergibt sich bei einem Lückenvolumen in der Wirbelschicht von etwa 60 bis 70 %. Die Fluidisierung ermöglicht einerseits eine gleichmäßige Oberflächenbenetzung der Zuckerteilchen und zum anderen eine gleichmäßige Anhaftung des Geliermittelstaubes an der Zuckerteilchenoberfläche, wobei unter Geliermittelstaub eine Formulierung aus gelbildenden Polysacchariden und Zusatzstoffen wie Sacchariden zu verstehen ist. Hierfür eignen sich insbesondere Agar, Alginat, Carrageen oder Guar jeweils für sich allein oder als Mischung und gegebenenfalls in Kombination mit Zusatzstoffen. Erfindungsgemäß können somit nur ein einziges gelbildendes Polysaccharid, oder aber eine Mischung aus zumindest zwei verschiedenen gelbildenden Polysacchariden, oder aber ein einziges Polysaccharid in Kombination mit einem Zusatzstoff bzw. Zusatzstoffen oder aber eine Mischung von zumindest zwei verschiedenen gelbildenden Polysacchariden in Kombination mit zumindest einern Zusatzstoff zum Einsatz kommen.

Etwaig verwendete Pektine werden in Kombination mit einer Zugabe von Genusssäuren in Form von Salzen oder Lösungen (flüssig) eingesetzt. Weiterhin besteht die Möglichkeit, nach der Beschichtung weitere gelierverbessernde Zusatzstoffe wie z. B. Vernetzungsmittel und Puffersalze zuzugeben.

Die zur Fluidisierung von unten in die Wirbelschicht eingeblasene nicht erwärmte Frischluft trocknet die überschüssige Feuchtigkeit ab und verhindert somit eine Verklumpung der auf ihrer Oberfläche gleichmäßig mit Geliermittelstaub bedeckten Zuckerteilchen. Bei dem aufgedüsten Wasser bzw. wässrigen Lösung kann es sich um Trinkwasser, entionisiertes Wasser oder aber auch um eine wässrige Zuckerlösung handeln.

Durch die nachfolgende, ebenfalls in Wirbelschichtverfahren durchgeführte Beschichtung wird das gleichmäßig an den Zuckerteilchenoberflächen anhaftende Geliermittel mit Beschichtungsmaterial fixiert und somit vor Abrieb geschützt.

Um eine gleichmäßige und schnelle Verteilung des Geliermittels in der durch die Zuckerteilchen gebildeten Wirbelschicht zu erzielen, ist es zweckmäßig, wenn das Geliermittel pneumatisch in mehreren Teilströmen in den unteren Bereich der Wirbelschicht eingebracht wird.

Zur Erzielung eines geschlossenen Produktkreislaufs und zur Schonung der Umwelt ist es vorteilhaft, wenn aus der aus den Wirbelschichtzonen abgesaugten Abluft Geliermittel- und gegebenenfalls auch Zuckerstaub abgeschieden und in die Beschichtungszone zurückgeführt werden.

Der Beschichtungsprozess sowie die anschließende Trocknung des Produktes werden vorteilhaft beeinflusst, wenn die im Wirbelschichtverfahren durchgeführte Umhüllung in der Beschichtungszone und Trocknung in der Trocknungszone mit vorgewärmter Einblasluft durchgeführt werden.

Weitere Merkmale der Erfindung sind Gegenstand der Unteransprüche und werden in Verbindung mit einem Ausführungsbeispiel näher erläutert.

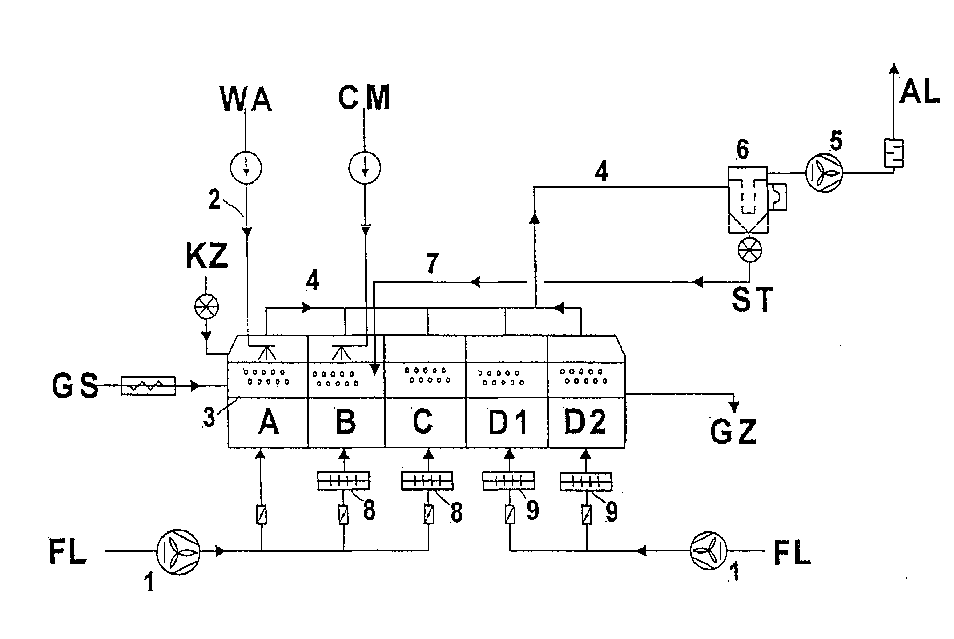

In der Zeichnung ist eine als Beispiel dienende Ausführungsform der Erfindung anhand eines technologischen Verfahrensschemas dargestellt.

Es handelt sich um die Herstellung eines Gelierhilfsmittels im Wirbelschichtverfahren, das vier aufeinander folgende Verfahrensstufen aufweist, die als Agglomerationszone A, Beschichtungszone B, Trocknungszone C, Kühlungszone D1 und Kühlungszone D2 bezeichnet werden können. Die in diesem Wirbelschichtverfahren zu behandelnden körnigen Zuckerteilchen KZ bilden in den genannten Zonen eine Wirbelschicht, d.h. die körnigen Zuckerteilchen befinden sich in einem fluidisierten Zustand, der dadurch hervorgerufen wird, dass die zugeführten körnigen Zuckerteilchen KZ von unten mit Luft beaufschlagt werden, die eine solche Geschwindigkeit aufweist, dass die Zuckerteilchen angehoben und in einem schwebenden, sich durchmischenden Zustand gehalten werden, wodurch ein freier Zugang zu der Oberfläche der körnigen Zuckerteilchen und somit ein guter Stoff- und Wärmeübergang gewährleistet werden.

Trockene und auf eine Kornfraktion von 0,5 - 0,7 mm gesiebte Zuckerteilchen KZ werden kontinuierlich in die vorstehend genannte Agglomerationszone A eingespeist, in der sie von unten mit über ein Frischluftgebläse 1 eingeblasene Frischluft FL beaufschlagt werden. In einern bevorzugten Verfahren wird für die Zuckerteilchen KZ Weisszucker eingesetzt, Die Oberflächen der eingespeisten Zuckerteilchen werden mit Wasser bedüst; dies ist in der Zeichnung durch die Wasserzufuhr WA und eine Wasserzufuhrleitung 2 angedeutet. Über einen nicht näher dargestellten Regelkreis wird sichergestellt, dass die Austrittsluft über dieser Agglomerationszone A stets eine konstante Luftfeuchtigkeit besitzt. In einem bevorzugten Verfahren wird der Wasserdurchsatz so eingestellt, dass die relative Luftfeuchtigkeit einen Wert von 73 % annimmt.

Gleichzeitig wird im unteren Bereich der Wirbelschicht in unmittelbarer Nähe über dem Anströmboden 3 der Agglomerationszone A Geliermittelstaub GS in die befeuchtete Zuckerteilchen-Wirbelschicht eingeblasen. Obwohl dabei die herrschende Luftgeschwindigkeit über der Austragsgeschwindigkeit des Geliermittelstaubes liegt, wird dieser infolge der gleichmäßigen Benetzung der Oberflächen der Zuckerteilchen an diesen agglomeriert. Um eine schnelle, großflächige Einspeisung des Geliermittelstaubes zu erzielen, wird das Geliermittel pneumatisch in mehreren Teilströmen in den unteren Bereich der Wirbelschicht eingebracht. Dabei wird die Geliermittel-Zufuhr in Abhängigkeit vom Massenstrom der Zuckerteilchen so gesteuert, dass das Endprodukt einen Geliermittelgehalt im Bereich von 1,5 Masse-% aufweist. Als Geliermittel wird Alginat in Kombination mit einem Saccharoseanteil von 13 Masse-% als Zusatzstoff eingesetzt.

Die in der Agglomerationszone A eingesetzte Luftmenge besitzt in der Wirbelschicht eine Geschwindigkeit, die in einem bevorzugten Verfahren dem 10,1-fachen Wert der Wirbelpunktgeschwindigkeit für den d50-Durchmesser der eingesetzten Zuckerteilchen-Kornfraktion entspricht. Die Wirbelschichttemperatur wird dabei auf etwa 21°C eingestellt.

Etwaig vorhandene feine Zuckerteilchen und geringe Mengen an nicht agglomeriertem Geliermittel werden aus der Agglomerationszone A über eine Abluftleitung 4 von einem Abluftgebläse 5 ausgetragen und in einem in die Abluftleitung 4 geschalteten Abluftfilter 6 als Staub ST abgeschieden. Die in die Atmosphäre abströmende Abluft ist in der Zeichnung mit AL gekennzeichnet.

Das in der Agglomerationszone A aufgebrachte Geliermittel GS wird in der eingangs genannten Beschichtungszone B durch Aufsprühen eines flüssigen Beschichtungsmaterials CM fixiert. Dabei kann als flüssiges Beschichtungsmaterial eine kohlenhydrathaltige wässrige Lösung, z. B. untersättigte zuckerhaltige Lösung eingesetzt werden. In einem bevorzugten Verfahren wird eine Zuckerlösung mit einer Konzentration von 41,4 Masse-% Zucker verwendet, wobei ein Massenverhältnis von Zukkerlösung und zugeführten trockenen Zuckerteilchen von 1 zu 125 eingehalten wird.

Der in dem vorstehend beschriebenen Abluftfilter 6 abgeschiedene Staub ST wird über eine Staubeinblasleitung 7 in die Beschichtungszone B eingeblasen und hier mit der Zuckerlösung an den Zuckerteilchen gebunden.

Die Fixierung in der Beschichtungszone B erfolgt mit vorgewärmter Fluidisierungsluft. Die angesaugte Frischluft FL wird über einen Wärmetauscher 8 geleitet und mit einer Lufteintrittstemperatur von etwa 52°C in die Beschichtungszone B eingeblasen. Diese Lufteintrittstemperatur ist auf die Trocknung der Zuckerlösung ausgerichtet, wobei der Wert der Lufteintrittsgeschwindigkeit geringfügig über dem in der Agglomerationszone A liegt.

In der der Beschichtungszone B nachgeschalteten Trocknungszone C erfolgt eine schonende Nachtrocknung der in der Beschichtungszone B aufgesprühten Zuckerlösung; zugleich wird eine Separation von agglomerierten und nicht agglomerierten Partikeln vorgenommen. Hierfür wird die angesaugte und über Wärmetauscher 8 geleitete Frischluft FL auf eine Lufteintrittstemperatur von etwa 55°C geregelt.

In den der Trocknungszone C nachgeschalteten Kühlungszonen D1 und D2 erfolgt neben einer anfänglichen Nachtrocknung der Zuckerteilchen deren Kühlung, um die Produkttemperatur den nachfolgenden logistischen Prozessen anzupassen. Im Interesse einer schonenden Produktbehandlung wird die Luftmenge auf Werte im Bereich der 5-fachen Wirbelpunktgeschwindigkeit des d50-Durchmessers der eingesetzten Zuckerteilchen-Kornfraktion eingestellt. Die Lufteintrittstemperatur wird über Wärmetauscher 9 in der Kühlungszone D1 auf etwa 30°C und in der Kühlungszone D2 auf etwa 22°C eingeregelt.

Der getrocknete und gekühlte Gelierzucker GZ verlässt das Wirbelschichtverfahren am Ende der Kühlungszone D2.

Die in der Agglomerationszone A und/oder Beschichtungszone B für die Bedüsung der Zuckerteilchen eingesetzten Flüssigkeiten können Konservierungsstoffe enthalten.

In einem weiteren Ausführungsbeispiel wird für die Zuckerteilchen KZ anstelle von Weisszucker Rohzucker mit einem Geliermittelanteil von 1,42 Masse-% eingesetzt. Als Geliermittel dient anstelle von Alginat in Kombination mit Saccharose eine Formulierung von 52 Masse-% Tragant, 27 Masse-% Alginat und als Zusatzstoff 21 Masse-% Glucose.

## Patentansprüche

1. Verfahren zur Herstellung eines Gelierhilfsmittels (Gelierzucker), bestehend aus körnigen Zuckerteilchen und feinvermahlenen, gelbildenden Polysacchariden (nachfolgend "Gelierrnittel" genannt), **dadurch gekennzeichnet, dass** in einem Wirbelschichtverfahren im Durchlauf durch eine Vorrichtung die zugeführten Zuckerteilchen durch Luftbeaufschlagung von unten so fluidisiert werden, **dass** die Zuckerteilchen angehoben und in einem schwebenden Zustand bei einem Lückenvolumen in der Wirbelschicht von etwa 60 bis 70 % gehalten werden, wobei die Zuckerteilchen in einer ersten Fluidisierungszone von oben mit Wasser oder einer wässrigen Lösung bedüst und mit dem gleichzeitig zugeführten Geliermittel agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet wird (Trocknungszone).

2. Verfahren nach Anspruch 1, **dadurch gekennzeichnet, dass** als Geliermittel Agar, Alginat, Carrageen oder Guar jeweils für sich allein oder als Mischung verwendet werden.

3. Verfahren nach Anspruch 1 oder 2, **dadurch gekennzeichnet, dass** der Trocknungszone mindestens eine Fluidisierungszone zum Kühlen der fixierten Zukkerteilchen, an denen Geliermittel fixiert wurde, nachgeschaltet ist (Kühlzone).

4. Verfahren nach Anspruch 1, 2 oder 3, **dadurch gekennzeichnet, dass** das Geliermittel pneumatisch in mehreren Teilströmen in den unteren Bereich der Wirbelschicht eingebracht wird.

5. Verfahren nach einem der vorhergehenden Ansprüche, **dadurch gekennzeichnet, dass** die Geliermittelzufuhr in Abhängigkeit vom Massenstrom der Zukkerteilchen so gesteuert wird, **dass** das Endprodukt einen Geliermittelgehalt im Bereich von 0,5 bis 3,5 Masse-% aufweist.

6. Verfahren nach einem der vorhergehenden Ansprüche, **dadurch gekennzeichnet, dass** aus der aus den Fluidisierungszonen abgesaugten Abluft Geliermittel und ggf. auch Zuckerstaub abgeschieden und in die Beschichtungszone zurückgeführt werden.

7. Verfahren nach einem der vorhergehenden Ansprüche, **dadurch gekennzeichnet, dass** die im Wirbelschichtverfahren durchgeführte Fixierung in der Beschichtungszone und die Trocknung in der Trocknungszone mit vorgewärmter Fluidisierungsluft durchgeführt werden.

8. Verfahren nach Anspruch 7, **dadurch gekennzeichnet, dass** Frischluft angesaugt, über Wärmetauscher geleitet und dann zur Fluidisierung der Zuckerteilchen eingeblasen wird.

9. Verfahren nach einem der vorhergehenden Ansprüche, **dadurch gekennzeichnet, dass** die in der Agglomerationszone einzudüsende Menge an Wasser oder wässriger Lösung so eingestellt wird, **dass** die relative Feuchte der Abluft aus dieser Agglomerationszone einen Wert zwischen 50 und 92 % aufweist.

10. Verfahren nach einem der vorhergehenden Ansprüche, **dadurch gekennzeichnet, dass** die in der Beschichtungszone einzudüsende Menge an flüssigem Beschichtungsmaterial so eingestellt wird, **dass** der Trockensubstanz-Gehalt der Beschichtung auf den Zuckerteilchen im Bereich von 0,1 bis 5 % der in die Agglomerationszone zugeführten Masse an Zuckerteilchen entspricht.

11. Verfahren nach einem der vorhergehenden Ansprüche, **dadurch gekennzeichnet, dass** als flüssiges Beschichtungsmaterial eine kohlenhydrathaltige wässrige Lösung, z. B. untersättigte zuckerhaltige Lösung, eingesetzt wird.

12. Verfahren nach einem der vorhergehenden Ansprüche, **dadurch gekennzeichnet, dass** die in der Agglomerationszone und/oder Beschichtungszone für die Bedüsung der Zuckerteilchen eingesetzten Flüssigkeiten Konservierungsstoffe enthalten.

13. Verfahren nach einem der vorhergehenden Ansprüche, **dadurch gekennzeichnet, dass** für die zu überziehenden Zuckerteilchen Weisszucker, Rohzucker bzw. Zuckeralkohole verwendet werden.

14. Verfahren nach einem der Ansprüche 2 bis 13, **gekennzeichnet durch** eine Verwendung der Geliermittel in Kombination mit Zusatzstoffen.
